# EUROPÄISCHE PATENTSCHRIFT

(11) **EP 3 348 130 B1**
(45) Veröffentlichungstag und Bekanntmachung des Hinweises auf die Patenterteilung: **07.10.2020**
(21) Anmeldenummer: 18150716.1
(22) Anmeldetag: 09.01.2018
(51) Int. Cl.: A01D 41/127

(54) **MODELLBASIERTE PRÄDIKTIVE GESCHWINDIGKEITSKONTROLLE EINER ERNTEMASCHINE**
MODEL-BASED PREDICTIVE SPEED CONTROL OF A HARVESTING MACHINE
COMMANDE DE VITESSE PRÉDICTIVE D'UNE MOISSONNEUSE BASÉE SUR UN MODÈLE

(30) Priorität: 11.01.2017 DE 102017200336
(43) Veröffentlichungstag der Anmeldung: 18.07.2018
(73) Patentinhaber: Deere & Company, Moline, IL 61265 (US)
(72) Erfinder: Münch, Dr. Philipp, 68163 Mannheim (DE); Peschke, Tobias, 68163 Mannheim (DE)
(74) Vertreter: Holst, Sönke

(56) Entgegenhaltungen:
- EP-A1- 2 060 165
- EP-A1- 2 764 764
- TOM COEN ET AL: "Throughput control on a combine harvester using Model-based Predictive Control", AMERICAN SOCIETY OF AGRICULTURAL AND BIOLOGICAL ENGINEERS ANNUAL INTERNATIONAL MEETING 2010 PITTSBURGH, PENNSYLVANIA, JUNE 20, JUNE 23, 2010, Bd. 4-7, 20. Juni 2010 (2010-06-20), - 23. Juni 2010 (2010-06-23), Seiten 3289-3300, XP055464365, ISBN: 978-1-61738-835-4

## Beschreibung

Die Erfindung betrifft eine Anordnung zur Kontrolle der Vortriebsgeschwindigkeit einer Erntemaschine.

### Stand der Technik

Landwirtschaftliche Erntemaschinen dienen zur Ernte von Pflanzen von einem Feld. In der Erntemaschine finden in der Regel Verarbeitungsprozesse statt, um das Erntegut zwecks späterer Weiterverarbeitung zu behandeln. So wird das Erntegut in einem Feldhäcksler gehäckselt und in einem Mähdrescher gedroschen, getrennt und gereinigt. Der Antrieb der Erntemaschine erfolgt durch einen Antriebsmotor, bei dem es sich üblicherweise um einen (Diesel-) Verbrennungsmotor handelt. Der Antriebsmotor treibt über einen ersten Antriebsstrang die Bodeneingriffsmittel (Räder oder Raupenlaufwerke) der Erntemaschine und über einen zweiten Antriebsstrang die Erntegutbearbeitungs- und/oder -fördermittel der Erntemaschine an.

Es sind verschiedene Ansätze bekannt geworden, die Vortriebsgeschwindigkeit einer Erntemaschine selbsttätig zu regeln, um sicherzustellen, dass die verfügbare Leistung des Antriebsmotors möglichst optimal ausgenutzt wird, d.h. die Erntemaschine nicht zu langsam fährt und unwirtschaftlich arbeitet, aber auch nicht zu schnell fährt und den Antriebsmotor überlastet oder die Erntegutbearbeitungselemente bei zu großen Durchsätzen verstopfen. Ein relativ einfacher Ansatz dazu besteht darin, den aktuellen Emtegutdurchsatz in der Erntemaschine zu messen und mit einem gewünschten Erntegutdurchsatz zu vergleichen, um eine Stellgröße für eine Geschwindigkeitsvorgabeeinrichtung zu erzeugen (s. DE 1 199 039 B1). Später wurde vorgeschlagen, den zu erwartenden Durchsatz vorausschauend, basierend auf vorhergehenden Erntevorgängen zu berechnen, um die Vortriebsgeschwindigkeit rechtzeitig anzupassen, bevor eine größere Änderung des Erntegutdurchsatzes zu erwarten ist (DE 44 31 824 C1), oder man verwendet Sensoren an der Erntemaschine, die das Erntegut vor (DE 101 30 665 A1, EP 2 764 764 A1) oder neben der Erntemaschine sensieren (DE10 2014 208 068 A1) und kann darauf basierend die Geschwindigkeit der Erntemaschine vorausschauend planen und einstellen.

Bei der Vorgabe der Geschwindigkeit der Erntemaschine sind neben dem Emtegutdurchsatz verschiedene Randbedingungen zu beachten. Hierzu gehört neben Eigenschaften der Erntemaschine (z.B. Antriebsleistung, Traktionseigenschaften bei gegebenem Geländezustand, Verlustkennlinie bei Mähdreschern) beispielsweise der Bedienerkomfort, denn der Fahrer der Erntemaschine sollte möglichst nicht zu großen Beschleunigungen nach vorn und hinten ausgesetzt werden. Die DE 10 2014 205 233 A1 schlägt hierzu vor, anhand einer bekannten, zu erwartenden Bestandsdichte die Geschwindigkeit der Erntemaschine in einer vorgegebene Beschleunigungsminima und -maxima berücksichtigenden Weise vorzuplanen. Hierbei wird zunächst die Geschwindigkeit anhand des erwarteten Erntegutdurchsatzes vorgeplant und in dem Fall, dass die Beschleunigung größer oder kleiner als ein Maximum wäre, eine Umplanung der Geschwindigkeit durchgeführt.

Ein anderer Ansatz zur Bestimmung der Einstellung des Vortriebs einer Erntemaschine besteht darin, eine vorausschauende, modellbasierte Kontrolle (engl.: Model Predictive Control, MPC) vorzusehen (T. Coen et al., Computers and Electronics in Agriculture 63 (2008), 227 -236). Der Verbrennungsmotor und der hydrostatische Antrieb des Mähdreschers werden in einer Steuerung durch ein nicht-lineares mathematisches Modell repräsentiert und man versucht, eine Kostenminimierung durchzuführen, wobei als Eingabekosten Änderungen der Motordrehzahl und Pumpeneinstellung betrachtet werden. Um bei der Straßenfahrt eine möglichst geringe Motordrehzahl zu erreichen, wird der Zielfunktion neben den Eingabekosten (welche den Komfort des Fahrers repräsentieren) und einem Fehlerterm, der die Abweichung zwischen der gewünschten und der aktuellen Fahrgeschwindigkeit des Mähdreschers darstellt, ein zusätzlicher Strafterm in Form der Motordrehzahl zugeführt. Zudem werden Grenzen für die Motordrehzahl und die Pumpeneinstellung berücksichtigt. Es wird somit ein Optimierungsproblem gelöst und letztendlich eine optimale Vorgabe für die Motordrehzahl und die Pumpeneinstellung gefunden.

Dieser Ansatz wurde später (T. Coen et al., Throughput control on a combine harvester using Model-based Predictive Control, 2010 ASABE Annual International Meeting, Pittsburgh, Pennsylvania, June 20 - June 23, 2010) dahingehend erweitert, dass die Geschwindigkeit des Mähdreschers auch bei der Ernte mittels einer modellbasierten Steuerung im Sinne des Erreichens eines gewünschten Durchsatzes optimiert wird. Der Durchsatz wird anhand der Fahrgeschwindigkeit, der Förderrate, der Motorbelastung und/oder des in den Korntank strömenden Kornflusses gemessen und als Nebenbedingungen werden Änderungen der Pumpeneinstellung zur Begrenzung der Änderungen der Vortriebsgeschwindigkeit zwecks Erreichen eines Bedienerkomforts, die Fahrgeschwindigkeit, die Förderrate des Ernteguts in die Erntemaschine und die Motorbelastung berücksichtigt. Die modellbasierte Steuerung berücksichtigt den Erntegutdurchsatz in Form einer stochastischen Größe.

Die EP 3 085 221 A1 beschreibt eine Erntemaschine mit einer Steuerung, in der Kennfelder für den Betrieb der Erntemaschine abgespeichert sind. Die Steuerung ist mit einem vorausschauenden Sensor zur Erkennung der Eigenschaften des vor der Erntemaschine stehenden Ernteguts verbunden und optimiert die Einstellung von Drescheinrichtungen der Erntemaschine und die Vortriebsgeschwindigkeit, indem die optimale Einstellung anhand des Kennfelds ermittelt wird.

### Aufgabe

Die Vorgehensweise nach DE 10 2014 205 233 A1 ist relativ umständlich, da sie bei Bestandsdichtenänderungen eine Neuplanung der Geschwindigkeit erfordert. Die Optimierung nach Coen et al. (2008) ist lediglich für die Straßenfahrt konzipiert und kann unterschiedliche Bestandsdichten nicht berücksichtigen, während die Vorgehensweise von Coen et al. (2010) den Erntegutdurchsatz nicht basierend auf einer Messung, sondern lediglich basierend auf einem stochastischen Parameter berücksichtigt und daher nicht sehr genau arbeiten kann und die Vorgehensweise nach EP 3 085 221 A1 auf Kennfeldern basiert, die zuvor in aufwändiger Weise zu ermitteln sind.
Die vorliegende Erfindung hat sich zur Aufgabe gemacht, die erwähnten Nachteile zumindest teilweise zu vermeiden.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.
Die modellbasierte Kontrolle der Vortriebsgeschwindigkeit der Erntemaschine arbeitet derart, dass zunächst mithilfe eines dynamischen (mathematischen) Modells für die Erntemaschine bzw. deren Betriebszustand und mithilfe einer Kostenfunktion ein Optimierungsproblem aufgestellt wird. Diese Kostenfunktion ordnet unerwünschten Maschinenzuständen höhere Kosten zu als erwünschten Maschinenzuständen und berücksichtigt auch Nebenbedingungen. Ein Problemlöser stellt eine Planung der Stellgröße (bei dem Mähdrescher üblicherweise eine mit einer Fahrgeschwindigkeitsänderung im Zusammenhang stehende Größe) bereit, die eine Sequenz an vorgeschlagenen Stellbefehlen enthält. Es erfolgt demnach eine Formulierung der Lastregelung des Antriebsmotors der Erntemaschine als Optimierungsproblem unter Berücksichtigung von Nebenbedingungen. Somit kann eine ganzheitliche Optimierung verschiedener Regelgrößen (wie eine durchsatzabhängige Größe, bei der es sich um das Antriebsmoment einer Erntegutbearbeitungseinrichtung (Dreschrotor) handeln kann, Antriebsmotorleistung, Kornverluste) unter Gewichtung der einzelnen Regelgrößen und einer den Fahrkomfort bestimmenden Größe (Summe der Geschwindigkeitsänderungen) erfolgen. Die Optimierungssoftware berechnet eine optimierte Fahrgeschwindigkeit über einen gewissen Planungshorizont (Vorhersagezeitraum) anhand des Modells, wobei insbesondere die durchsatzabhängige Größe, die Antriebsmotorleistung und/oder die Kornverluste unter Berücksichtigung der erwähnten Gewichtungen Eingang finden.

Bei der Definition der Kostenfunktion und des Optimierungsproblems wird neben gemessenen und/oder beobachteten Maschinenzuständen, die beispielsweise die aktuelle Flussrate des Ernteguts und/oder die Auslastung des Antriebsmotors betreffen, auch der erwartete, in vorausschauender Weise ermittelte Durchsatz berücksichtigt. Die Lösung des Optimierungsproblems erfolgt im Zeitbereich, um eine zeitliche Sequenz der vorgeschlagenen Stellbefehle zu erzeugen. Von dieser Sequenz wird nur jeweils der erste Stellbefehl auch ausgeführt. Als Eingangswert benötigt man somit eine Information hinsichtlich der erwarteten Durchsätze als Funktion der Zeit. Zur Verfügung stehen jedoch nur Informationen über die Bestandsdichte bzw. den zugehörigen Durchsatz als Funktion des Ortes, an dem sich das Erntegut befindet, dessen Massendichte zuvor sensorisch oder anhand modellbasierter Rechnungen ermittelt wurde. Eine direkte Umrechnung des bekannten, ortsabhängigen Durchsatzes in einen zu bestimmenden, zeitabhängigen Durchsatz ist jedoch nicht möglich, weil zu einem Zeitpunkt t die zukünftige Geschwindigkeit der Erntemaschine noch nicht bekannt ist, da diese ja erst durch den Algorithmus zu ermitteln ist.

Es wird daher vorgeschlagen, anhand der Sequenz der geplanten Geschwindigkeiten der Erntemaschine und gemessener und/oder beobachteter Maschinenzustände eine Sequenz erwarteter Positionen der Erntemaschine zu berechnen, und letztere zur Berechnung der erwarteten Durchsätze als Funktion der Zeit oder des Ortes heranzuziehen und diese zeit- oder ortsabhängigen Durchsätze dem Optimierungsproblem zuzuführen. Hierbei findet ein die physischen Eigenschaften der Erntemaschine repräsentierendes Geschwindigkeitsmodell Anwendung.

Die Steuereinrichtung kann als den Betriebszustand der Erntemaschine beschreibende Größen gemessene und/oder beobachtete Maschinenzustände berücksichtigen, wie die aktuelle Rate von der Erntemaschine aufgenommenen Ernteguts und/oder die Auslastung eines Antriebsmotors der Erntemaschine.

Die Steuereinrichtung kann, wie oben erwähnt, eine vorausschauende, modellbasierte Steuerung durch Optimierung der Kostenfunktion realisieren. Hierzu kann die Kostenfunktion als Funktion des Zustandes, der Ausgangsgrößen und der Eingangsgrößen der Erntemaschine dargestellt werden und, unter Berücksichtigung von Beschränkungen der Eingangsgrößen (welche die oben erwähnte, mindestens eine Nebenbedingung darstellt), unterschiedliche Eingangsgrößen über den Vorhersagezeitraum durchgespielt werden und dabei die Zustände und Ausgangsgrößen über einen Vorhersagezeitraum vorhergesagt werden und jeweils die erste Eingangsgröße einer optimierten Sequenz von Eingangsgrößen als optimierter Arbeitsparameter ausgegeben werden. Das zu Grunde liegende Modell kann in unterschiedlichen Detaillierungsgraden vorliegen und beispielsweise auch Drescheinstellungen die Geländesteigung in Vorwärts- und/oder Querrichtung, den dem erwarteten Durchsatz zugehörigen Kornverlust, den Korntankfüllstand und/oder die Fruchtart und/oder den Zustand der Frucht und/oder die erreichte Qualität des geernteten Materials (Bruchkorn, Verunreinigungen) berücksichtigen.

Vorzugsweise ist ein Störbeobachter vorgesehen, der eingerichtet ist, eventuelle Abweichungen zwischen einer erwarteten Rate des aufgenommenen Ernteguts und der tatsächlichen Rate des aufgenommenen Ernteguts zu erkennen und zur Korrektur der Kostenfunktion zu verwenden.

Die Steuereinrichtung kann programmiert sein, als Beschränkung der Eingangsgröße einen maximalen Erntegutdurchsatz und/oder maximale Verluste und/oder eine verfügbare Antriebsleistung und/oder einen maximalen Betrag der Beschleunigung und/oder einen maximalen Betrag der Zeitableitung der Beschleunigung (so genannter Ruck) und/oder eine maximale Vortriebsgeschwindigkeit zu berücksichtigen.

Die Steuereinrichtung kann programmiert sein, eine oder mehrere der den Betriebszustand der Erntemaschine repräsentierenden Größen und/oder die physische Eigenschaften der Erntemaschine repräsentierende Größen anhand von Messwerten durch einen unter Verwendung eines Streckenmodells und/oder eines Beobachters für nicht direkt beobachtbare Maschinenzustände abzuschätzen und dem Optimierungsproblem zuzuführen. Da die Optimierung und Planung über den Vorhersagezeitraum bei jedem Abtastschritt erneut durchgeführt wird und anhand der Abweichung zwischen dem aus dem Streckenmodell bzw. dem vom Beobachter verwendeten Modell abgeleiteten Werten und den zugehörigen, gemessenen Sensorwerten angepasst wird, werden die Sollwerte der Regelgrößen auch bei permanenten Abweichungen zwischen dem Modell und den tatsächlichen Werten erreicht.

Mittels einer Bedienereingabeeinrichtung kann eine von der Steuereinrichtung berücksichtigte Gewichtung der einzelnen Regelgrößen und/oder einer den Fahrkomfort bestimmenden Größe eingebbar sein. Die Gewichtungen können dem Fahrer in Form eines virtuellen Schiebereglers präsentiert werden und ihm somit anschaulich die Gewichtung zwischen leistungsabhängigen Größen (z.B. Einhaltung der Sollwerte hinsichtlich Durchsatz, Auslastung des Antriebsmotors und/oder Kornverluste) und Komfort (Beschleunigungen der Erntemaschine) und/oder Gewichtung der leistungsabhängigen Größen untereinander zu ermöglichen. Bei der Vorgabe der Vortriebsgeschwindigkeit wird die eingegebene Gewichtung durch die Steuereinrichtung entsprechend berücksichtigt.

Die Erntemaschine kann als Mähdrescher oder Feldhäcksler ausgeführt sein.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht einer landwirtschaftlichen Erntemaschine in Form eines Mähdreschers,
- Fig. 2: ein Schema einer Anordnung zur Kontrolle der Vortriebsgeschwindigkeit der Erntemaschine der Figur 1, und
- Fig. 3: ein detailliertes Diagramm der Steuereinrichtung der Anordnung der Figur 2.

### Erntemaschine

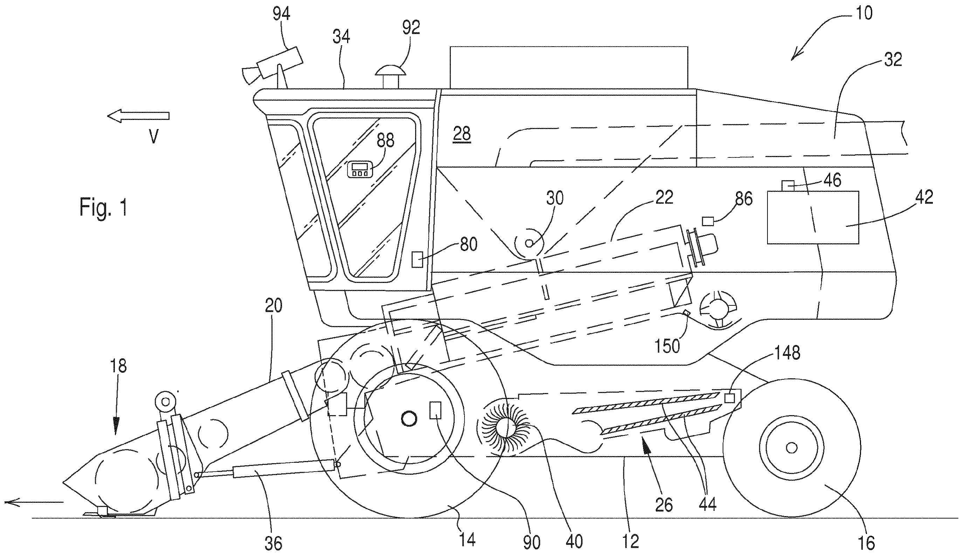

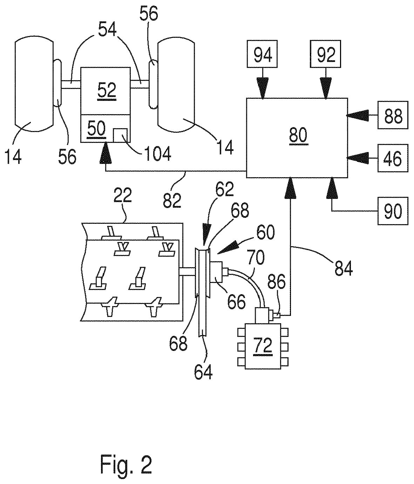

Die Figur 1 zeigt eine selbstfahrende Erntemaschine 10 in Form eines Mähdreschers mit einem Fahrgestell 12, das sich über angetriebene vordere Räder 14 und lenkbare rückwärtige Räder 16 auf dem Boden abstützt und von diesen fortbewegt wird. Die Räder 14, 16 werden mittels in der Figur 2 gezeigter Antriebsmittel in Drehung versetzt, um die Erntemaschine 10 z. B. über ein abzuerntendes Feld zu bewegen. Im Folgenden beziehen sich Richtungsangaben, wie vorn und hinten, auf die Fahrtrichtung V der Erntemaschine 10 im Erntebetrieb, die in der Figur 1 nach links verläuft.

An den vorderen Endbereich der Erntemaschine 10 ist ein Erntevorsatz 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägfördererzusammenbau 20 einem Axialdreschwerk 22 zuzuführen. Das im Axialdreschwerk 22 durch Dreschkörbe und Roste hindurchtretende, Körner und Verunreinigungen enthaltende Gemisch gelangt in eine Reinigungseinrichtung 26. Durch die Reinigungseinrichtung 26 gereinigtes Getreide wird mittels einer Körnerschnecke einem Körnerelevator zugeführt, der es in einen Korntank 28 befördert. Das gereinigte Getreide aus dem Korntank 28 kann durch ein Entladesystem mit einer Querschnecke 30 und einem Entladeförderer 32 entladen werden. Die genannten Systeme werden mittels eines Verbrennungsmotors 42 angetrieben, dem eine Motorsteuerung 46 zugeordnet ist, und von einem Bediener aus einer Fahrerkabine 34 heraus kontrolliert und gesteuert, wozu eine Bedienerschnittstelle 88 vorgesehen ist.

### Hardware zur Geschwindigkeitssteuerung

Es wird nun auf die Figur 2 verwiesen. Die vorderen Räder 14 der Erntemaschine 10 werden durch ein hydrostatisches Getriebe 50 angetrieben. Das hydrostatische Getriebe 50 wird auf konventionelle Weise durch den Verbrennungsmotor 42 angetrieben. Das hydrostatische Getriebe 50 treibt wiederum ein Schaltgetriebe 52 an. Zwei treibende Wellen 54 erstrecken sich vom Schaltgetriebe 52 nach außen und treiben Endantriebe 56 der vorderen Räder 14 an. Das hydrostatische Getriebe 50 umfasst eine Pumpeneinheit und eine Motoreinheit, wobei die Pumpeneinheit auch im Abstand von der Motoreinheit angeordnet sein könnte. Die Pumpeneinheit und/oder die Motoreinheit sind mit einstellbaren Taumelplatten ausgestattet. Die einstellbaren Taumelplatten steuern die Ausgangsgeschwindigkeit des Getriebes 50 und dessen Drehrichtung. Elektromagnetisch gesteuerte Steuerventile 104 steuern die Positionen der Taumelplatten. Die lenkbaren hinteren Räder 16 können auch durch Radmotoren angetrieben werden, die direkt an den Rädern 16 befestigt sind. Die Geschwindigkeit der Radmotoren kann ebenfalls durch das unten beschriebene Durchsatzsteuerungssystem gesteuert werden.

Ein verstellbarer Antrieb 60 mit variablem Drehmoment treibt den Rotor des Axialdreschwerks 22 an. Derselbe Verbrennungsmotor 42, der auch das hydrostatische Getriebe 50 antreibt, treibt auch den verstellbaren Antrieb 60 an. Der verstellbare Antrieb 60 ist ein Riementrieb, der eine nicht gezeigte antreibende Riemenscheibe mit variablem Durchmesser und eine angetriebene Riemenscheibe 62 mit variablem Durchmesser umfasst. Ein Riemen 64 erstreckt sich zwischen der antreibenden Riemenscheibe und der angetriebenen Riemenscheibe 62, um Rotationsleistung zu übertragen. Hydraulikzylinder steuern die Durchmesser der Riemenscheiben. Der Hydraulikzylinder 66 ist mit der angetriebenen Riemenscheibe 62 gekoppelt und bewegt die Stirnplatten 68 der Riemenscheibe 62 nach innen bzw. außen, um den wirksamen Durchmesser der Riemenscheibe 62 gegenüber dem Riemen 64 zu steuern. Durch eine Änderung des wirksamen Durchmessers der Riemenscheiben wird die effektive Geschwindigkeit der angetriebenen Riemenscheibe 62 geändert. Durch eine Hydraulikleitung 70 wird dem Hydraulikzylinder 66 unter Druck stehende Hydraulikflüssigkeit von einem Ventilzusammenbau 72 zugeführt. Der Rotor des Axialdreschwerks 22 wird durch die Riemenscheiben variablen Durchmessers mit einer konstanten, ausgewählten Rotorgeschwindigkeit angetrieben. Das vom Riemen 64 und den Riemenscheiben übertragene Drehmoment variiert mit dem Gutdurchsatz.

Eine elektronische Steuereinrichtung 80 steuert die Vortriebs- und somit die Erntegeschwindigkeit der Erntemaschine 10. Das bedeutet, dass die elektronische Steuereinrichtung 80 die Vorwärtsgeschwindigkeit (Erntegeschwindigkeit) des Mähdreschers 10 durch ein Einstellen der Position der Taumelplatten des hydrostatischen Getriebes 50 einstellt, indem der Betrieb der elektromagnetisch betätigten Steuerventile 104 über eine Leitung 82 gesteuert wird. Die Steuereinrichtung 80 empfängt durch die Leitung 84 ein aktuelles Hydraulikdrucksignal von einem Hydraulikdrucksensor 86. Der Hydraulikdrucksensor 86 fühlt den Hydraulikdruck des Hydraulikzylinders 66, der den Antrieb 60 mit variablem Drehmoment verstellt. Es wurde herausgefunden, dass der Hydraulikdruck, mit dem der Hydraulikzylinder 66 den Antrieb 60 verstellt, mit dem Durchsatz in eindeutiger Beziehung steht. Über die Leitung 84 wird die Steuereinrichtung 80 demnach mit einem Signal beaufschlagt, das eine Information hinsichtlich des tatsächlichen Erntegutdurchsatzes der Erntemaschine 10 enthält. Zudem erhält die Steuereinrichtung 80 von einem Geschwindigkeitssensor 90 Signale hinsichtlich der tatsächlichen Vortriebsgeschwindigkeit V der Erntemaschine 10. Der Geschwindigkeitssensor 90 kann beispielsweise als Radarsensor die Geschwindigkeit der Erntemaschine 10 gegenüber dem Erdboden oder die Drehzahl eines der vorderen Räder 14 erfassen. Auch wird der Steuereinrichtung 80 ein Signal hinsichtlich der jeweils vom Verbrennungsmotor 42 abgegebenen Leistung zugeführt, das von der Motorsteuerung 46 bereitgestellt werden kann und auf dessen Kraftstoffverbrauch und/oder einer Drehmomentmessung an der Kurbelwelle des Verbrennungsmotors 42 beruhen kann. Auch die Bedienerschnittstelle 88 ist mit der Steuereinrichtung 80 verbunden.

### Software zur Geschwindigkeitssteuerung

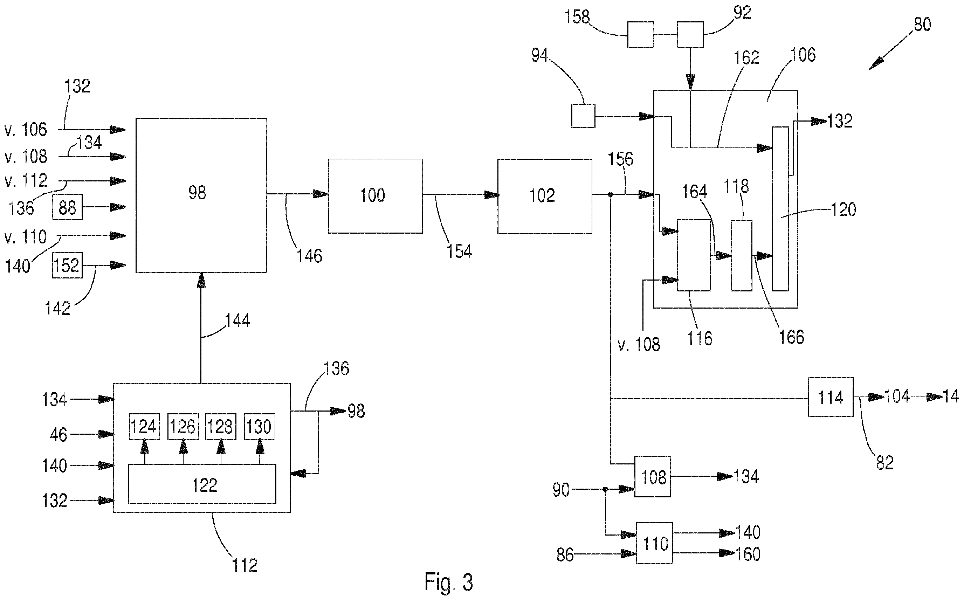

Die Figur 3 zeigt den Aufbau der Steuereinrichtung 80 detaillierter. Sie umfasst eine Einrichtung 98 zur Aufstellung eines Optimierungsproblems und einer Kostenfunktion, eine Lösungseinrichtung 100, eine Geschwindigkeitsvorgabeberechnungseinrichtung 102, eine Umrechnungseinrichtung 106 und eine Kontrolleinrichtung 114 zur Ansteuerung der Steuerventile 104.

Die Einrichtung 98 zur Aufstellung des Optimierungsproblems und der Kostenfunktion dient dazu, eine modellbasierte, prädiktive Regelung der Vortriebsgeschwindigkeit der Erntemaschine 10 zu realisieren. Sie enthält einen Prozessor o. dgl., der programmiert ist, anhand von den jeweiligen Betriebszustand der Erntemaschine 10 beschreibenden Größen und wenigstens einer Nebenbedingung ein Optimierungsproblem und eine zugehörige Kostenfunktion aufzustellen.
Der Einrichtung 98 wird als Eingangswert eine zeitabhängige Vorhersage 132 der Rate aufgenommenen Ernteguts zugeführt, die von der Umrechnungseinrichtung 106 bereitgestellt wird, welche weiter unten detaillierter beschrieben wird. Weiterhin werden der Einrichtung 98 als Eingangswert vom jeweiligen Betriebszustand der Erntemaschine 10 abhängige Größen 134 zugeführt, die durch Sensoren der Erntemaschine 10 direkt gemessen sein können, z.B. durch einen Kornverlustsensor 148 am Ende des Obersiebs der Reinigungseinrichtung 26 und/oder einen Kornverlustsensor 150 am Auslass des Axialdreschwerks 22 und oder einen Überkehrsensor (nicht gezeigt) zur Erkennung der Menge und/oder des Kornanteils in der Überkehr, die nicht ausgedroschenes Material vom Untersieb der Reinigungseinrichtung 26 zurück zum Axialdreschwerk 22 oder einem separaten Nachdrescher fördert und/oder den Geschwindigkeitssensor 90 und/oder eine von der Motorsteuerung 46 bereitgestellte Belastung des Antriebsmotors 42 und/oder den vom Hydraulikdrucksensor 86 bereitgestellten Messwert und/oder einen anderen Sensorwert für den jeweiligen Erntegutdurchsatz, und/oder die (unter ggf. Fortfall der Kornverlustsensoren 148, 150) von einem Beobachter 108 für nicht direkt beobachtbare Maschinenzustände abgeschätzt werden. Weiterhin wird der Einrichtung 98 ein erwarteter zeitlicher Verlauf einer (zu optimierenden) Regelgröße 136 zugeführt, bei der es sich beispielsweise um die Belastung des Verbrennungsmotors 42 handeln kann, die von einem Maschinenmodellierungsmodul 112 abgeschätzt und der Einrichtung 98 bereitgestellt wird.

Der Einrichtung 98 werden außerdem Daten zugeführt, die eine Gewichtung der in die Kostenfunktion eingehenden Parameter ermöglichen. Diese Daten können zumindest teilweise durch die Bedienerschnittstelle 88 eingebbar sein, sodass ein Bediener beispielsweise auswählen kann, ob ihm Komfort (d.h. eine Beschränkung der maximalen im Betrieb auftretenden Beschleunigungen und Verzögerungen der Erntemaschine 10 und/oder einer daraus abgeleiteten Größe, die beispielsweise einem Zeitintegral der Wurzel der quadrierten Beschleunigungen entsprechen kann) oder eine optimale Auslastung der Erntemaschine 10 wichtiger sind. Alternativ oder zusätzlich kann der Bediener auswählen, welche Leistungsparameter der Erntemaschine 10, wie Auslastung des Antriebsmotors 46, Durchsatz und/oder Verluste ihm wichtig sind. Hierzu kann die Bedienerschnittstelle 88 eine Auswahloption beinhalten, die es dem Bediener ermöglicht, zwecks der beschriebenen Eingabe einen virtuellen Schieberegler oder Drehknopf auf einem berührungsempfindlichen Bildschirm der Bedienerschnittstelle zu verstellen oder die Daten auf beliebige andere Weise einzugeben. Die Daten zur Gewichtung der Kostenfunktion werden durch die Einrichtung 98 (oder einen anderen Teil der Steuereinrichtung 80) in Gewichtungsmatrizen für die Kostenfunktion umgerechnet.

Zudem wird der Einrichtung 98 optional ein Biomassenfehler 140 zugeführt, der von einem Störbeobachter 110 bereitgestellt wird. Dieser Biomassenfehler 140 ermöglicht der Einrichtung 98 eventuelle Korrekturen an der von der Umrechnungseinrichtung 106 bereitgestellten Vorhersage 132 des Durchsatzes der Erntemaschine 10. Dem Störbeobachter 110 wird dazu ein Signal vom Hydraulikdrucksensor 86 und ein Signal vom Geschwindigkeitssensor 90 zugeführt, anhand welchen der Störbeobachter 110 die aufgenommene Rate des Ernteguts berechnet und den Biomassenfehler 140 unter Berücksichtigung der Vorhersage 132 als Fehlerwert der Einrichtung 98 zuführt. Der Störbeobachter 110 gibt zudem einen Fehlerwert 160 aus, der einen Unterschied zwischen einem erwarteten und beobachteten Druck am Hydraulikdrucksensor 86 darstellt und von der Einrichtung 98 oder der Steuerung 80 verwendet werden kann, z.B. zur Korrektur der Einstellung der Steuerventile 104 durch die Kontrolleinrichtung 114 oder ggf. zur Bereitstellung eines Fehlersignals bei größeren Abweichungen.

Der Einrichtung 98 werden weiterhin Daten 142 hinsichtlich von Nebenbedingungen zugeführt, die beispielsweise Grenzwerte der Erntemaschine 10 repräsentieren können, wie maximale Geschwindigkeit, maximale Beschleunigung und Verzögerung, maximaler Durchsatz oder maximaler Druck am Hydraulikdrucksensor 86. Diese Daten 142 können in einem Speicher 152 fest vorgegeben abgelegt sein oder (vorzugsweise nur bei Vorliegen von Administratorrechten) teilweise oder sämtlich mittels der Bedienereingabeeinrichtung 88 eingebbar sein.

Ein Maschinenmodellierungsmodul 112 wird mit den vom jeweiligen Betriebszustand der Erntemaschine 10 abhängigen Größen 134, der aktuellen Belastung des Antriebsmotors 42, die von der Motorsteuerung 46 bereitgestellt wird, dem Biomassenfehler 140 und der Vorhersage 132 beaufschlagt. Das Maschinenmodellierungsmodul 112 umfasst einen Schätzer 122 für Modellparameter, dem die erwähnten Größen 134, Belastung des Antriebsmotors 42 von der Motorsteuerung 46, 140 und 132 zugeführt werden und der anhand dieser Größen Parameter für ein oder mehrere Streckenmodelle abschätzt, bei denen es sich hier um ein Geschwindigkeitsmodell 124, ein Motorlastmodell 126, ein Rotordruckmodell 128 und/oder ein Kornverlustmodell 130 sowie ggf. weitere Modelle (nicht gezeigt) handelt. Die erwähnten Modelle 124, 126, 128 und/oder 130 verwenden die vom Schätzer 122 berechneten Parameter, um die Einrichtung 98 im Betrieb mit erwarteten, berechneten Daten 144 hinsichtlich des erwarteten Geschwindigkeitsverlaufs über einen den Vorhersagezeitraum darstellenden Zeithorizont, der erwarteten Motorlast des Antriebsmotors 42 über einen Zeithorizont, des erwarteten Drucks am Hydraulikdrucksensor 86 (und/oder eines beliebigen anderen, auf den erwarteten Erntegutdurchsatz hinweisenden Wertes) über einen Zeithorizont und/oder der erwarteten Kornverluste über einen Zeithorizont zu beaufschlagen. Diese Daten 144 werden durch die Einrichtung 98 bei der Aufstellung des Optimierungsproblems und der Kostenfunktion berücksichtigt. Das Maschinenmodellierungsmodul 112 gibt zudem den Wert 136 für die erwartete Belastung des Antriebsmotors 42 über einen Zeithorizont an die Einrichtung 98 aus und berücksichtigt diese Belastung auch im Schätzer 122.

Im Betrieb berechnet die Einrichtung 98 die Größen für ein Optimierungsproblem und eine zugehörige Kostenfunktion. Hierzu sei generell auf den eingangs erwähnten Stand der Technik nach Coen et al. (2008 und 2010) und die dort zitierten Referenzen verwiesen, deren Inhalt durch Verweis mit in die vorliegenden Unterlagen aufgenommen wird. Das Optimierungsproblem repräsentiert ein (durch die Daten 144 definiertes) Modell der Erntemaschine 10 und hängt von deren jeweiligem Betriebszustand ab. Die Kostenfunktion ordnet erwünschten Betriebszuständen niedrigere Kosten zu als unerwünschten Betriebszuständen. Die Größen des Optimierungsproblems und die zugehörige Kostenfunktion werden insgesamt mit 146 bezeichnet und der Lösungseinrichtung 100 zugeführt, die eine Sequenz an Stellgrößen 154 erzeugt, welche das Optimierungsproblem löst und die zugehörige Kostenfunktion minimiert. Die Sequenz an Stellgrößen 154 stellt eine zeitlich aufeinander folgende Reihenfolge von Sollgrößen dar, welche eine Information hinsichtlich der Geschwindigkeit der Erntemaschine beinhalten. Es kann sich bei der Sequenz an Stellgrößen 154 um relative Werte handeln, z.B. um einer Position eines manuell betätigbaren Geschwindigkeitsvorgabemittels (Pedal oder Handhebel) entsprechende Werte.

Die Sequenz an Stellgrößen 154 wird von der Lösungseinrichtung 100 der Geschwindigkeitsvorgabeberechnungseinrichtung 102 zugeführt, welche die Sequenz an Stellgrößen 154 in eine Sequenz 156 absoluter Geschwindigkeiten umrechnet. Nur jeweils der zeitlich erste Wert der Sequenz 156 wird der Kontrolleinrichtung 114 zugeführt, die über die Leitung 82 Stellbefehle an die Steuerventile 104 abgibt.

Die Sequenz an Stellgrößen 156 wird von der Geschwindigkeitsvorgabeberechnungseinrichtung 102 zudem einem Beobachter 108 für nicht direkt messbare Maschinenzustände zugeführt, der auch Werte vom Geschwindigkeitssensor 90 zugeführt werden. Dieser Beobachter 108 gibt die oben erwähnten Größen 134 aus, d.h. er kann auch Eingangswerte von weiteren Sensoren 148, 150 erhalten. Die Größen 134 werden, wie beschrieben, der Einrichtung 98, der Umrechnungseinrichtung 106 und dem Maschinenmodellierungsmodul 112 zugeführt.

Die Einrichtung 98 benötigt, wie oben beschrieben, eine zeitabhängige Vorhersage 132 der Rate aufgenommenen Ernteguts in Abhängigkeit von der Zeit. Eine (als Einrichtung zur Bestimmung des erwarteten Rate von der Erntemaschine 10 aufgenommenen Ernteguts dienende) Kamera 94, bei der es sich um eine Mono- oder Stereokamera im sichtbaren oder einem anderen Frequenzbereich handeln kann, bestimmt mittels einer nachgeschalteter Bildverarbeitung anhand der von ihr aufgenommenen Bilder des vor dem Erntevorsatz 18 stehenden Erntegutes einen erwarteten Erntegutdurchsatz 162 als Funktion des Ortes. Anstelle oder zusätzlich zu einer Kamera 94 kann auch ein Laser- oder Radarsensor verwendet werden. Alternativ oder zusätzlich kann eine (als Einrichtung zur Bestimmung des erwarteten Rate von der Erntemaschine 10 aufgenommenen Ernteguts dienende) Positionsbestimmungseinrichtung 92 die aktuelle Position und Fahrtrichtung der Erntemaschine 10 feststellen und unter Verwendung in einer Karte 158 abgespeicherter Daten, die bei vorherigen Erntevorgängen oder während der Wachstumsperiode des Ernteguts oder bei benachbarten Überfahrten über das Feld beim vorliegenden Erntevorgang durch die Erntemaschine 10 oder eine andere Erntemaschine gewonnen wurden, einen erwarteten Erntegutdurchsatz 162 als Funktion des Ortes bereitstellen. Dieser erwartete, ortsabhängige Erntegutdurchsatz 162 wird in der Umrechnungseinrichtung 106 einer Berechnungseinheit 120 zugeführt.

Die Umrechnungseinrichtung 106 erhält zudem die Sequenz 156 absoluter Geschwindigkeiten von der Geschwindigkeitsvorgabeberechnungseinrichtung 102 und ein Teil oder alle der beschriebenen, vom jeweiligen Betriebszustand der Erntemaschine 10 abhängigen, gemessenen und/oder berechneten Größen 134, die gemeinsam einem Geschwindigkeitsberechnungsmodell 116 zugeführt werden. Das Geschwindigkeitsberechnungsmodell 116 berechnet anhand der ihm zugeführten Daten und ggf. weiterer, bekannter Parameter (die z.B. vom Geschwindigkeitsmodell 124 kommen können) eine Sequenz 164 der (tatsächlich) zu erwartenden Geschwindigkeiten der Erntemaschine 10. Diese Sequenz 164 wird anschließend in einem Distanzberechner 118 hochintegriert und eine Sequenz 166 zu erwartender Orte ausgegeben, die ebenfalls der Berechnungseinheit 120 zugeführt wird. Letztere berechnet anhand der Sequenz 166 und den den jeweiligen Orten zugeordneten Durchsätzen 162 die zeitabhängige Vorhersage 132 der Rate aufgenommenen Ernteguts.

Die beschriebenen Vorgänge werden in zeitlich aufeinander folgenden Schritten wiederholt. Dabei werden auch die Parameter der Streckenmodelle im Maschinenmodellierungsmodul 112 und/oder im Geschwindigkeitsberechnungsmodell 116 bei jedem oder manchem Wiederholungsschritt, basierend auf den erfassten Messgrößen, die dem Maschinenmodellierungsmodul 112 bzw. dem Geschwindigkeitsberechnungsmodell 116 zugeführt werden, aktualisiert.

## Patentansprüche

1. Anordnung zur selbsttätigen Kontrolle der Vortriebsgeschwindigkeit einer Erntemaschine (10), umfassend:
eine Steuereinrichtung (80) mit einer Einrichtung (98) zur Aufstellung eines Optimierungsproblems und einer Kostenfunktion sowie mit einer Lösungseinrichtung (100), wobei die Einrichtung (98) zur Aufstellung des Optimierungsproblems und der Kostenfunktion einen Prozessor enthält, der programmiert ist, in zeitlich aufeinander folgenden Schritten anhand von den jeweiligen Betriebszustand der Erntemaschine (10) beschreibenden Größen (134) und wenigstens einer Nebenbedingung (142) eine Kostenfunktion und ein zugehöriges Optimierungsproblem aufzustellen und die Lösungseinrichtung (100) eingerichtet ist, zeitlich aufeinander folgende Sequenzen (154) von Stellgrößen zur Vorgabe der Vortriebsgeschwindigkeit bereitzustellen, welche das jeweilige Optimierungsproblem lösen und die zugehörige Kostenfunktion minimieren,
eine Geschwindigkeitsvorgabeberechnungseinrichtung (102), welche konfiguriert ist, die Sequenz an Stellgrößen (154) zur Vorgabe der Vortriebsgeschwindigkeit von der Lösungseinrichtung (100) zu erhalten und die Sequenz an Stellgrößen (154) zur Vorgabe der Vortriebsgeschwindigkeit in eine Sequenz (156) absoluter Geschwindigkeiten umzurechnen,
eine Kontrolleinrichtung (114) zur Ansteuerung eines die Vortriebsgeschwindigkeit der Erntemaschine (10) beeinflussenden Aktors (104), die konfiguriert ist, von der Geschwindigkeitsvorgabeberechnungseinrichtung (102) jeweils den zeitlich ersten Stellbefehl jeder Sequenz (156) absoluter Geschwindigkeiten zur Vorgabe der Vortriebsgeschwindigkeit zu erhalten, wobei die Einrichtung (98) zur Aufstellung des Optimierungsproblems und der Kostenfunktion mit einer Einrichtung (92, 94) zur Bestimmung der erwarteten Rate von der Erntemaschine (10) aufgenommenen Ernteguts in Abhängigkeit von der Position der Erntemaschine (10) verbunden ist,
dass eine Umrechnungseinrichtung (106) programmiert ist, eine Sequenz (166) erwarteter Positionen der Erntemaschine (10) zu berechnen und anhand der Sequenz (166) der berechneten Positionen und den von der Einrichtung (92, 94) zur Bestimmung der erwarteten Rate von der Erntemaschine (10) aufgenommenen Ernteguts bereitgestellten, positionsabhängigen Raten eine Vorhersage (132) der Rate aufgenommenen Ernteguts zu berechnen und diese Vorhersage (132) als Eingangsgröße des Optimierungsproblems der Einrichtung (98) zur Aufstellung des Optimierungsproblems und der Kostenfunktion zuzuführen, **gekennzeichnet dadurch, dass** die Umrechnungseinrichtung (106) programmiert ist, die Sequenz (166) der erwarteten Positionen der Erntemaschine (10) und die Vorhersage (132) der Rate aufgenommenen Emteguts zeit- oder ortsabhängig zu berechnen und die zeit- oder ortsabhängige Sequenz (166) erwarteter Positionen der Erntemaschine (10) anhand der jeweils vorliegenden Sequenz (154) von Stellbefehlen zur Vorgabe der Vortriebsgeschwindigkeit der Erntemaschine (10) und gemessener und/oder beobachteter, den jeweiligen Betriebszustand der Erntemaschine (10) beschreibenden Größen (134) zu berechnen.

2. Anordnung nach Anspruch 1, wobei die Einrichtung (98) zur Aufstellung des Optimierungsproblems und der Kostenfunktion programmiert ist, als den Betriebszustand der Erntemaschine beschreibende Größen (134) gemessene und/oder beobachtete Maschinenzustände zu berücksichtigen.

3. Anordnung nach Anspruch 2, wobei die Einrichtung (98) zur Aufstellung des Optimierungsproblems und der Kostenfunktion programmiert ist, als Betriebszustand der Erntemaschine beschreibende Größen (134) die aktuelle Rate von der Erntemaschine (10) aufgenommenen Ernteguts und/oder die Auslastung eines Antriebsmotors (42) der Erntemaschine (10) zu verwenden.

4. Anordnung nach einem der Ansprüche 1 bis 3, wobei die Steuereinrichtung (80) programmiert ist, durch die Optimierung der Kostenfunktion eine vorausschauende, modellbasierte Steuerung zu realisieren, indem die Kostenfunktion zeitabhängig als Funktion eines Zustandes, von Ausgangsgrößen und von Eingangsgrößen der Erntemaschine (10) dargestellt wird und, unter Berücksichtigung von Beschränkungen der Eingangsgrößen, unterschiedliche Eingangsgrößen über einen Vorhersagezeitraum durchgespielt werden und dabei die Zustände und Ausgangsgrößen über den Vorhersagezeitraum vorhergesagt werden und jeweils der zeitlich erste Wert einer Sequenz (156) absoluter Geschwindigkeiten, die von der Geschwindigkeitsvorgabeberechnungseinrichtung (102) basierend auf der optimierten Sequenz (154) von Stellgrößen zur Vorgabe der Vortriebsgeschwindigkeit bestimmt wurde, als optimierter Arbeitsparameter an die Kontrolleinrichtung (114) ausgegeben wird.

5. Anordnung nach einem der Ansprüche 1 bis 4, mit einem Störbeobachter (110), der eingerichtet ist, eventuelle Abweichungen zwischen einer erwarteten Rate des aufgenommenen Ernteguts und der tatsächlichen Rate des aufgenommenen Emteguts zu erkennen und zur Korrektur der Kostenfunktion zu verwenden.

6. Anordnung nach einem der Ansprüche 1 bis 5, wobei die Einrichtung (98) zur Aufstellung des Optimierungsproblems und der Kostenfunktion programmiert ist, als Beschränkung einer Eingangsgröße einen maximalen Erntegutdurchsatz und/oder maximale Verluste und/oder eine verfügbare Antriebsleistung und/oder eine maximale Beschleunigung und/oder eine maximale Zeitableitung der Beschleunigung und/oder eine maximale Vortriebsgeschwindigkeit zu berücksichtigen.

7. Anordnung nach einem der vorhergehenden Ansprüche, wobei die Steuereinrichtung (80) ein Maschinenmodellierungsmodul (112) umfasst, welches programmiert ist, eine oder mehrere der den Betriebszustand der Erntemaschine repräsentierenden Größen (134) und/oder die physische Eigenschaften der Erntemaschine repräsentierenden Größen anhand von Messwerten abzuschätzen und die Einrichtung (98) zur Aufstellung des Optimierungsproblems und der Kostenfunktion konfiguriert ist, anhand dieser Größen berechnete Daten (144) bei der Aufstellung des Optimierungsproblems und der Optimierung der Kostenfunktion zu berücksichtigen.

8. Anordnung nach einem der vorhergehenden Ansprüche, mit einer Bedienereingabeeinrichtung (88), welche zur Eingabe einer von der Steuereinrichtung (80) berücksichtigten Gewichtung der einzelnen Regelgrößen und/oder einer den Fahrkomfort bestimmenden Größe konfiguriert ist

9. Erntemaschine (10) mit einer Anordnung nach einem der vorhergehenden Ansprüche.

## Claims

1. Arrangement for automatically controlling the propulsion speed of a harvesting machine (10), comprising:
a control device (80) having a device (98) for establishing an optimization problem and a cost function, and having a resolution device (100), wherein the device (98) for establishing the optimization problem and the cost function contains a processor which is programmed to establish a cost function and an associated optimization problem in temporally successive steps on the basis of variables (134) describing the respective operating state of the harvesting machine (10) and on the basis of at least one secondary condition (142), and the resolution device (100) is designed to provide temporally successive sequences (154) of actuating variables for specifying the propulsion speed, which actuation variables solve the respective optimization problem and minimize the associated cost function,
a speed setting device (102) which is configured to obtain the sequence of actuating variables (154) for specifying the propulsion speed from the resolution device (100) and to convert the sequence of actuating variables (154) for specifying the propulsion speed into a sequence (156) of absolute speeds,
a monitoring device (114) for activating an actuator (104) influencing the propulsion speed of the harvesting machine (10), said monitoring device being configured to obtain from the speed setting device (102) in each case the temporally first actuating command of each sequence (156) of absolute speeds for specifying the propulsion speed,
wherein the device (98) for establishing the optimization problem and the cost function is connected to a device (92, 94) for determining, depending on the position of the harvesting machine (10), the anticipated rate of crop picked up by the harvesting machine (10),
wherein a conversion device (106) is programmed to calculate a sequence (166) of anticipated positions of the harvesting machine (10) and, on the basis of the sequence (166) of the calculated positions and the position-dependent rates provided by the device (92, 94) for determining the anticipated rate of crop picked up by the harvesting machine (10), to calculate a prediction (132) of the rate of picked-up crop and to supply said prediction (132) as an input variable of the optimization problem to the device (98) for establishing the optimization problem and the cost function,
**characterized in that** the conversion device (106) is programmed to calculate the sequence (166) of the anticipated positions of the harvesting machine (10) and the prediction (132) of the rate of picked-up crop depending on time or position and to calculate the time- or position-dependent sequence (166) of anticipated positions of the harvesting machine (10) on the basis of the respectively present sequence (154) of actuating commands for specifying the propulsion speed of the harvesting machine (10) and measured and/or observed variables (134) describing the respective operating state of the harvesting machine (10).

2. Arrangement according to Claim 1, wherein the device (98) for establishing the optimization problem and the cost function is programmed to take into consideration measured and/or observed machine states as variables (134) describing the operating state of the harvesting machine.

3. Arrangement according to Claim 2, wherein the device (98) for establishing the optimization problem and the cost function is programmed to use the current rate of crop picked up by the harvesting machine (10) and/or the load of a drive motor (42) of the harvesting machine (10) as variables (134) describing the operating state of the harvesting machine.

4. Arrangement according to one of Claims 1 to 3, wherein the control device (80) is programmed in order, by optimizing the cost function, to realize a predictive, model-based control by the cost function being represented in a time-dependent manner as a function of a state and of output variables and input variables of the harvesting machine (10) and, with limitations of the input variables being taken into consideration, different input variables are run through over a prediction period and the states and output variables are predicted here over the prediction period and in each case the temporally first value of a sequence (156) of absolute speeds, which sequence has been determined by the speed setting device (102) on the basis of the optimized sequence (154) of actuating variables for specifying the propulsion speed, is output as an optimized working parameter to the monitoring device (114).

5. Arrangement according to one of Claims 1 to 4, having a disturbance observer (110) which is designed to identify possible deviations between an anticipated rate of the picked-up crop and the actual rate of the picked-up crop and to use said deviations for correcting the cost function.

6. Arrangement according to one of Claims 1 to 5, wherein the device (98) for establishing the optimization problem and the cost function is programmed to take into consideration, as a limitation of an input variable, a maximum crop throughput and/or maximum losses and/or an available drive power and/or a maximum acceleration and/or a maximum time derivative of the acceleration and/or a maximum propulsion speed.

7. Arrangement according to one of the preceding claims, wherein the control device (80) comprises a machine modelling module (112) which is programmed to estimate one or more of the variables (134) representing the operating state of the harvesting machine and/or variables representing the physical properties of the harvesting machine on the basis of measured values and the device (98) for establishing the optimization problem and the cost function is configured to take into consideration data (144) calculated on the basis of said variables in the establishing of the optimization problem and the optimization of the cost function.

8. Arrangement according to one of the preceding claims, having an operator input device (88) which is configured for inputting a weighting of the individual regulating variables and/or of a variable determining the driving comfort, said weighting being taken into consideration by the control device (80) .

9. Harvesting machine (10) having an arrangement according to one of the preceding claims.

## Revendications

1. Dispositif de commande automatique de la vitesse d'avancement d'une machine de récolte (10), ledit dispositif comprenant :
un moyen de commande (80) muni d'un moyen (98) destiné à établir un problème d'optimisation et une fonction de coût ainsi qu'un moyen de solution (100), le moyen (98) destiné à établir le problème d'optimisation et la fonction de coût contenant un processeur qui est programmé pour établir une fonction de coût par étapes temporellement successives sur la base de grandeurs (134), décrivant l'état de fonctionnement respectif de la machine de récolte (10), et d'au moins une condition secondaire (142) et un problème d'optimisation associé et le moyen de solution (100) étant conçu pour produire des séquences temporellement successives (154) de grandeurs de réglage pour spécifier la vitesse d'avancement, lesquelles résolvent le problème d'optimisation respectif et minimisent la fonction de coût associée,
un moyen de calcul de spécification de vitesse (102) qui est conçu pour recevoir la séquence de grandeurs de réglage (154), destinées à spécifier la vitesse d'avancement, du moyen de solution (100) et pour convertir la séquence de grandeurs de réglage (154), destinées à spécifier la vitesse d'avancement, en une séquence (156) de vitesses absolues,
un moyen de commande (114) destiné à commander un actionneur (104) qui influe sur la vitesse d'avancement de la machine de récolte (10) et qui est conçu pour recevoir du moyen de calcul de spécification de vitesse (102) la première instruction de réglage de chaque séquence (156) de vitesses absolues pour spécifier la vitesse d'avancement,
le moyen (98) destiné à établir le problème d'optimisation et la fonction de coût étant relié à un moyen (92, 94) destiné à déterminer le rendement attendu de récolte ramassée par la machine de récolte (10) en fonction de la position de la machine de récolte (10),
un moyen de conversion (106) étant programmé pour calculer une séquence (166) de positions attendues de la machine de récolte (10) et pour calculer, sur la base de la séquence (166) des positions calculées et des rendements, fonction de la position, produits par le moyen (92, 94) destiné à déterminer le rendement attendu de récolte ramassée par la machine de récolte (10), une prédiction (132) du rendement de récolte ramassée et pour fournir cette prédiction (132) en tant que grandeur d'entrée du problème d'optimisation au moyen (98) destiné à établir le problème d'optimisation et la fonction de coût,
**caractérisé en ce que** le dispositif de conversion (106) est programmé pour calculer la séquence (166) des positions attendues de la machine de récolte (10) et la prédiction (132) du rendement de récolte ramassée en fonction du temps ou du lieu, et pour calculer la séquence (166), dépendante du temps ou du lieu, de positions attendues de la machine de récolte (10) sur la base de la séquence respectivement présente (154) d'instruction de réglage pour spécifier la vitesse d'avancement de la machine de récolte (10) et des grandeurs mesurées et/ou observées (134) décrivant l'état de fonctionnement respectif de la machine de récolte (10).

2. Dispositif selon la revendication 1, le moyen (98) destiné à établir le problème d'optimisation et la fonction de coût étant programmé pour prendre en compte des états mesurés et/ou observés de la machine en tant que grandeurs (134) décrivant l'état de fonctionnement de la machine de récolte.

3. Dispositif selon la revendication 2, le moyen (98) destiné à établir le problème d'optimisation et la fonction de coût étant programmé pour utiliser comme grandeur (134) décrivant l'état de fonctionnement de la machine de récolte le rendement actuel de récolte ramassée par la machine de récolte (10) et/ou l'utilisation maximale d'un moteur d'entraînement (42) de la machine de récolte (10).

4. Dispositif selon l'une des revendications 1 à 3, le moyen de commande (80) étant programmé pour mettre en œuvre une commande prédictive basée sur un modèle en optimisant la fonction de coût en ce que la fonction de coût est dépendante du temps et fonction d'un état, de grandeurs de sortie et de grandeurs d'entrée de la machine de récolte (10) et en ce que, en prenant en compte des limitations des grandeurs d'entrée, différentes grandeurs d'entrée sont envisagées sur une période de prédiction et les états et les grandeurs de sortie sont prédits sur la période de prédiction et à chaque fois la première valeur temporelle d'une séquence (156) de vitesses absolues, qui sont déterminées par le moyen de calcul de spécification de vitesse (102) sur la base de la séquence optimisée (154) de grandeurs de réglage pour spécifier la vitesse d'avancement, est délivrée au moyen dispositif de commande (114) en tant que paramètre de travail optimisé.

5. Dispositif selon l'une des revendications 1 à 4, comprenant un observateur de perturbations (110) qui est conçu pour détecter d'éventuels écarts entre un rendement attendu de la récolte ramassée et le rendement réel de la récolte ramassée et les utiliser pour corriger la fonction de coût.

6. Dispositif selon l'une des revendications 1 à 5, le moyen (98) destiné à spécifier le problème d'optimisation et la fonction de coût étant programmé pour prendre en compte, comme limitation d'une grandeur d'entrée, un rendement de récolte maximal et/ou des pertes maximales et/ou une puissance d'entraînement disponible et/ou une accélération maximale et/ou une dérivée temporelle maximale de l'accélération et/ou une vitesse d'avancement maximale.

7. Dispositif selon l'une des revendications précédentes,
le moyen de commande (80) comprenant un module de modélisation de machine (112) qui est programmé pour estimer une ou plusieurs des grandeurs (134) représentant l'état de fonctionnement de la machine de récolte et/ou des grandeurs représentant les propriétés physiques de la machine de récolte sur la base de valeurs de mesure et
le moyen (98) destiné à établir le problème d'optimisation et l'optimisation de la fonction de coût étant conçu pour prendre en compte des données (144), calculées sur la base de ces grandeurs, lors de l'établissement du problème d'optimisation et de l'optimisation de la fonction de coût.

8. Dispositif selon l'une des revendications précédentes, comprenant un moyen d'entrée utilisateur (88) qui est conçu pour entrer une pondération des grandeurs de régulation individuelles, prise en compte par le moyen de commande (80), et/ou une grandeur déterminant le confort de conduite.

9. Machine de récolte (10) comprenant un dispositif selon l'une des revendications précédentes.
